# EUROPEAN PATENT APPLICATION

(11) **EP 4 624 557 A1**
(43) Date of publication of application: **01.10.2025**
(21) Application number: 23894542.2
(22) Date of filing: 20.11.2023
(51) Int. Cl.: C11D 3/20, C11D 1/02, C11D 1/66

(54) **ADHESIVE REMOVER AND ADHESIVE REMOVAL METHOD USING SAID ADHESIVE REMOVER**

(30) Priority: 22.11.2022 JP 2022186753
(71) Applicant: MORESCO Corporation, Kobe-shi, Hyogo 650-0047 (JP)
(72) Inventor: SAMITSU, Maki, Kobe-shi, Hyogo 650-0047 (JP)
(74) Representative: Schlegel, Sebastian
(86) International application number: PCT/JP2023/041578
(87) International publication number: WO 2024/111534

(57) **Abstract**

An object is to provide: an adhesive remover capable of sufficiently removing an adhesive from a material; and a method for removing an adhesive with use of the adhesive remover. The object is attainable by an adhesive remover that contains oil and a surfactant, the oil containing at least one selected from the group consisting of a specific vegetable oil, a specific ester oil, an aliphatic carboxylic acid, and a mineral oil, the surfactant containing an anionic surfactant and/or a nonionic surfactant that has an HLB of more than 5 and is liquid at room temperature.

## Description

### Technical Field

The present invention relates to an adhesive remover and an adhesive removal method using the adhesive remover.

### Background Art

Adhesives have been used widely in the fields of furniture, architecture, electricity and electronics, automobiles, packing materials, clothing, household goods, and the like. Various articles such as a packing material (e.g., a food packaging material and cardboard), a book, a hygiene product (e.g., a diaper), and a car floor mat are constructed by bonding a material(s) with use of an adhesive.

In recent years, from the perspective of reducing environmental load, the technology of recycling a used article is attracting attention.

For example, Patent Literature 1 discloses a method of recovering pulp fiber from a used absorbent article including the pulp fiber and a super absorbent polymer. The method is characterized by including a step of inactivating the super absorbent polymer by treating the used absorbent article with use of an aqueous solution containing (i) not less than 0.05% by mass of at least one terpene selected from the group consisting of terpene hydrocarbon, terpene aldehyde, and terpene ketone and (ii) an inactivating agent capable of inactivating the super absorbent polymer. Patent Literature 1 further discloses deconstruction of the used absorbent article by introducing the used absorbent article into a washing machine that contains the aqueous solution and utilizing centrifugal force.

### Citation List

### [Patent Literature]

Patent Literature 1 : Japanese Patent Application Publication, Tokukai, No. 2018-24964

### Summary of Invention

### Technical Problem

The conventional technology as described above deconstructs an absorbent article into constituent components (materials) and reuses recovered pulp fiber as a resource. However, in the conventional technology as described above, there is a possibility that an adhesive remains on the constituent components obtained by deconstruction of the absorbent article, and the constituent components are bonded to each other again. Further, in a case where an adhesive remains on recovered pulp fiber, the recovered pulp fiber may have a problem in quality when reused as a resource. From these perspectives, the conventional technology described above has room for improvement.

An embodiment of the present invention has been made in view of the above problems and has an object of providing: an adhesive remover capable of sufficiently removing an adhesive from a material; and a method for removing an adhesive with use of the adhesive remover.

### Solution to Problem

In order to attain the object, an adhesive remover in accordance with an embodiment of the present invention includes the following features.

An adhesive remover, containing oil and a surfactant,
the oil containing at least one selected from the group consisting of a vegetable oil, an ester oil, an aliphatic carboxylic acid, and a mineral oil,
the vegetable oil having an iodine value of 70 to 160,
the ester oil having not more than three ester groups per molecule,
the surfactant containing an anionic surfactant and/or a nonionic surfactant that has an HLB of more than 5 and is liquid at room temperature.

### Advantageous Effects of Invention

According to an aspect of the present invention, it is possible to provide: an adhesive remover capable of sufficiently removing an adhesive from a material; and a method for removing an adhesive with use of the adhesive remover.

### Description of Embodiments

The following description will discuss embodiments of the present invention in detail. Note, however, that the present invention is not limited to the following embodiments, but can be altered within this disclosure. The present invention also encompasses, in its technical scope, any embodiment derived by combining technical means disclosed in differing embodiments as appropriate. Note that the expression "A to B" representing a numerical range means "not less than A and not more than B" unless otherwise specified herein. Further, "room temperature" herein means a temperature of 18°C to 26°C.

### [1. Adhesive remover]

An adhesive remover in accordance with an embodiment of the present invention (may hereinafter be referred to as "the present adhesive remover") contains oil and a surfactant, the oil containing at least one selected from the group consisting of a vegetable oil, an ester oil, an aliphatic carboxylic acid, and a mineral oil, the vegetable oil having an iodine value of 70 to 160, the ester oil having not more than three ester groups per molecule, the surfactant containing an anionic surfactant and/or a nonionic surfactant that has an HLB of more than 5 and is liquid at room temperature. The adhesive remover as described above has an advantage that it is possible to sufficiently remove an adhesive from a material. The above configuration allows an article bonded by an adhesive to be separated into materials on which the adhesive does not remain. As such, there is an advantage that an article bonded by an adhesive can be suitably recycled. Such an advantageous effect contributes to achieving, for example, Goal 12 "responsible consumption and production" and the like of the Sustainable Development Goals (SDGs) proposed by the United Nations.

Further, since the above configuration makes it possible to sufficiently remove an adhesive from a material, there is also an advantage that an article can be separated, without use of centrifugal force or the like, into materials which are constituent elements. Further, since no adhesive remains on the materials, there is an advantage that the materials are not bonded to each other again after the removal of the adhesive. That is, the above configuration provides an advantage that it is possible to efficiently recycle an article bonded by an adhesive.

In addition, in a case where an article made by bonding materials with use of an adhesive is a disposable diaper, use of the present adhesive remover makes it possible to remove the adhesive even in a state where the diaper is rolled up, because the adhesive remover permeates the disposable diaper deep into an inside thereof. That is, there is an advantage that it is possible, without opening the rolled-up disposable diaper after use, to remove the adhesive to thereby deconstruct the article. Further, there is also an advantage that it is possible to not only separate and recover pulp and an SAP (super absorbent polymer) from the disposable diaper but also separate and recover a nonwoven fabric, a film, an elastic thread, and the like individually.

It is preferable that the present adhesive remover be liquid at room temperature. A viscosity of the present adhesive remover is not particularly limited but is preferably 15 mPa·s to 2600 mPa·s and more preferably 30 mPa·s to 1700 mPa·s. The above configuration provides an advantage that the present adhesive remover easily permeates an adhesive and is therefore capable of sufficiently removing the adhesive from a material. Note that a value of the viscosity of the adhesive remover varies depending on components contained and a mixing ratio of the components. It is also preferable that the present adhesive remover be oil based. That "the present adhesive remover is oil based" herein means "an adhesive remover in which a total amount of oil and a surfactant added is more than an amount(s) of the other component(s)".

### (1-1. Oil)

The present adhesive remover contains oil. The above configuration provides an advantage that it is possible to dissolve an adhesive and remove the adhesive from an article.

It is preferable that the oil be liquid at room temperature. The above configuration provides an advantage that it is possible to easily mix the oil with a surfactant at room temperature.

In an embodiment of the present invention, the oil contains at least one selected from the group consisting of a vegetable oil, an ester oil, an aliphatic carboxylic acid, and a mineral oil. It is more preferable that the oil contain a vegetable oil or an ester oil, and it is even more preferable that the oil consist of a vegetable oil or an ester oil. The above configuration provides an advantage that the oil has high affinity for a surfactant and makes it possible to more sufficiently remove an adhesive from a material. Note that the oil may be a mixture of at least two selected from the group consisting of a vegetable oil, an ester oil, an aliphatic carboxylic acid, and a mineral oil.

In the present adhesive remover, a proportion of the oil contained is preferably more than 10% by weight and less than 70% by weight, more preferably not less than 15% by weight and not more than 65% by weight, more preferably not less than 18% by weight and not more than 60% by weight, more preferably not less than 20% by weight and not more than 55% by weight, even more preferably not less than 20% by weight and not more than 50% by weight, and particularly preferably not less than 20% by weight and not more than 45% by weight, relative to 100% by weight of a total of the oil and the surfactant. The above configuration provides an advantage that the oil has strong affinity for a surfactant and makes it possible to more sufficiently remove an adhesive from a material.

### (1-1-1. Vegetable oil)

It is preferable that the present adhesive remover contain a vegetable oil. The above configuration provides an advantage that it is possible to more sufficiently remove an adhesive from a material.

The present adhesive remover preferably contains no animal oil. Since many animal oils are in solid form, it tends to be difficult to mix an animal oil and a surfactant at room temperature.

In a case where the present adhesive remover contains a vegetable oil, an iodine value of the vegetable oil is 70 to 160, more preferably 80 to 150, even more preferably 90 to 140, and particularly preferably 100 to 130. The above configuration provides an advantage that good affinity between the oil and the surfactant is achieved, and the adhesive remover is therefore capable of more sufficiently removing an adhesive from a material. A vegetable oil that has a low iodine value (for example, not more than 140) is highly safe and can therefore be handled with use of simple equipment.

The present adhesive remover may contain a plurality of types of vegetable oils. Note that the "iodine value of a vegetable oil" means, in a case where the present adhesive remover contains one type of vegetable oil, an iodine value of the one type of vegetable oil, and means, in a case where the present adhesive remover contains a plurality of types of vegetable oils, an iodine value of a mixed vegetable oil consisting of the plurality of types of vegetable oils contained in the present adhesive remover. That is, in a case where the present adhesive remover contains a plurality of types of vegetable oils, a mixed vegetable oil consisting of the plurality of types of vegetable oils has an iodine value of 70 to 160.

An iodine value herein means the number of grams of iodine (I) that can be added to 100 g of oil or fat. That is, the greater the iodine value, the higher a degree of unsaturation of a fatty acid in a sample (the greater the number of double bonds). In a case where the present adhesive remover contains a plurality of types of vegetable oils, the "iodine value of a vegetable oil" is determined by a measurement method in conformity with JIS K 0070-1992. The vegetable oil may be a mixture of at least two selected from the group consisting of a semidrying oil, a nondrying oil, and a drying oil.

Herein, an oil having an iodine value of not less than 140 is referred to as a drying oil, an oil having an iodine value of more than 100 and less than 140 is referred to as a semidrying oil, and an oil having an iodine value of not more than 100 is referred to as a nondrying oil.

In an embodiment of the present invention, the vegetable oil is, for example, preferably at least one selected from the group consisting of soybean oil, rice oil, olive oil, avocado oil, rice bran oil, orange seed oil, carrot seed oil, canola oil, apricot kernel oil, peach kernel oil, almond oil, *crambe abyssinica* seed oil, sesame oil, rice germ oil, watermelon seed oil, grape fruit seed oil, tomato seed oil, *passiflora edulis* seed oil, wheat germ oil, corn oil, linseed oil, rapeseed oil, coconut oil, palm kernel oil, and castor oil, more preferably at least one selected from the group consisting of soybean oil, rice oil, olive oil, and rapeseed oil, and even more preferably soybean oil and/or rice oil. The above configuration provides an advantage that it is possible to more sufficiently remove an adhesive from a material.

In an embodiment of the present invention, a flash point of the vegetable oil is not particularly limited but is preferably not lower than 150°C and more preferably not lower than 200°C, from the perspective of safety and ease of handling.

### (1-1-2. Ester oil)

It is preferable that the present adhesive remover contain an ester oil.

In an embodiment of the present invention, the ester oil contains not more than three, preferably not more than two, and more preferably two ester groups per molecule. The above configuration provides an advantage that it is possible to more sufficiently remove an adhesive from a material.

The ester oil has an SP value of preferably 8.0 to 9.5, more preferably 8.3 to 9.4, even more preferably 8.5 to 9.3, and particularly preferably 8.7 to 9.2. The above configuration provides an advantage that it is possible to more sufficiently remove an adhesive from a material.

An SP value (solubility parameter) herein means a Hansen solubility parameter (HSP value) defined by a Hansen method. An SP value δ is a quantity δ defined as δ = (δ_{d}²+δₚ²+δₕ²)^{1/2} where δ_{d}, δₚ, and δₕ are terms of dispersion, polarity, and a hydrogen bond, respectively, of a substance, and is a value unique to the substance.

In an embodiment of the present invention, the ester oil is not particularly limited, but examples thereof include DOS (bis(2-ethylhexyl) sebacate), DIDA (diisodecyl adipate), DINA (diisononyl adipate), DOA (bis(2-ethylhexyl) adipate), diisobutyl adipate, 2-hexyldecyl adipate, di(2-heptylundecyl) adipate, isostearyl isostearate, trimethylolpropane triisos-tearate, cetyl 2-ethylhexanoate, neopentyl glycol di(2-ethylhexanoate), trimethylolpropane tri-2-ethylhexanoate, cetyl octanoate, oleyl oleate, octyldodecyl oleate, decyl oleate, neopentylglycol dicaprate, 2-ethylhexyl succinate, isocetyl stearate, butyl stearate, diisopropyl sebacate, cetyl lactate, tetradecyl lactate, isopropyl myristate, octyldodecyl myristate, cetyl myristate, myristyl myristate, octyl palmitate, 2-ethylhexyl palmitate, 2-hexyldecyl palmitate, 2-heptylundecyl palmitate, cholesteryl 12-hydroxystearate, phytosteryl oleate, malate diisostearyl, paramethoxy cinnamate, and pentaerythrite tetrarosinate. The ester oil is preferably DOS. The above configuration provides an advantage that it is possible to more sufficiently remove an adhesive from a material.

### (1-1-3. Aliphatic carboxylic acid)

It is preferable that the present adhesive remover contain an aliphatic carboxylic acid. Examples of the aliphatic carboxylic acid include a monocarboxylic acid, a dicarboxylic acid, an acid anhydride, and a polyvalent carboxylic acid. In an embodiment of the present invention, the aliphatic carboxylic acid is more preferably an aliphatic carboxylic acid having two carboxy groups or a carboxylic anhydride, more preferably succinic acid or an anhydride thereof, and also more preferably alkenyl succinic acid or an anhydride thereof. Further, it is more preferable that the aliphatic carboxylic acid be an unsaturated aliphatic carboxylic acid. The above configuration provides an advantage that it is possible to more sufficiently remove an adhesive from a material. In an embodiment of the present invention, it is even more preferable that the aliphatic carboxylic acid be at least one selected from the group consisting of dodecenyl succinic acid, hexadecenyl succinic acid, octadecenyl succinic acid, and anhydrides thereof.

In an embodiment of the present invention, a molecular weight of the aliphatic carboxylic acid is not particularly limited, but, for example, the aliphatic carboxylic acid has a weight-average molecular weight of preferably 200 to 1200, and more preferably 250 to 1000.

### (1-1-4. Mineral oil)

It is preferable that the present adhesive remover contain a mineral oil.

The mineral oil has an SP value of preferably 8.0 to 9.5, more preferably 8.0 to 9.3, more preferably 8.0 to 9.0, more preferably 8.0 to 8.5, and particularly preferably 8.0 to 8.3. The above configuration provides an advantage that it is possible to more sufficiently remove an adhesive from a material.

In an embodiment of the present invention, the mineral oil having an SP value of 8.0 to 9.5 is not particularly limited, but examples thereof include an aromatic hydrocarbon, a paraffinic hydrocarbon, a naphthenic hydrocarbon, a light mineral oil, and a white mineral oil. More specifically, for example, spindle oil, liquid paraffin, and the like can be suitably used. The above configuration provides an advantage that it is possible to more sufficiently remove an adhesive from a material.

In an embodiment of the present invention, a viscosity of each of the ester oil and the mineral oil at room temperature is not particularly limited but is preferably 1 mPa·s to 200 mPa·s and more preferably 5 mPa·s to 100 mPa·s. The above configuration provides an advantage that it is possible to more sufficiently remove an adhesive from a material.

In an embodiment of the present invention, a flash point of each of the ester oil, the aliphatic carboxylic acid, and the mineral oil is not particularly limited but is preferably not lower than 150°C and more preferably not lower than 200°C, from the perspective of safety and ease of handling.

### (1-2. Surfactant)

The present adhesive remover contains a surfactant. The above configuration makes it possible to easily remove the adhesive remover from a material after separation. In other words, although the purpose of dissolving an adhesive can be achieved with use of oil alone, the present adhesive remover, due to containing a surfactant, makes it possible to sufficiently remove the adhesive remover from a material in the article. This makes it easy to handle a separated material.

In an embodiment of the present invention, the surfactant contains an anionic surfactant and/or a nonionic surfactant that has an HLB of more than 5 and that is liquid at room temperature. In an embodiment of the present invention, the surfactant preferably contains an anionic surfactant or a nonionic surfactant that has an HLB of more than 5 and that is liquid at room temperature, and even more preferably consists of a nonionic surfactant that has an HLB of more than 5 and that is liquid at room temperature.

In an embodiment of the present invention, relative to 100% by weight of the surfactant, a total content of the anionic surfactant and the nonionic surfactant having an HLB of more than 5 is preferably not less than 70% by weight, more preferably not less than 90% by weight, and even more preferably 100% by weight. The above configuration provides an advantage that it is possible to more sufficiently remove an adhesive from a material.

In an embodiment of the present invention, it is preferable that the nonionic surfactant having an HLB of more than 5 be contained in an amount greater than that of the anionic surfactant. Relative to 100% by weight of the total of the anionic surfactant and the nonionic surfactant having an HLB of more than 5, a content of the nonionic surfactant having an HLB of more than 5 is preferably not less than 60% by weight, more preferably not less than 80% by weight, even more preferably not less than 90% by weight, and particularly preferably 100% by weight. The above configuration provides an advantage that it is possible to more sufficiently remove an adhesive from a material.

A hydrophile-lipophile balance (HLB) herein means a numerical value representing a balance between lipophilicity and hydrophilicity in the surfactant. The HLB is a value obtained by equal division on the assumption that a substance having no hydrophilic group has an HLB of 0 and a substance having no lipophilic group and having only a hydrophilic group has an HLB of 20.

The HLB of the nonionic surfactant having an HLB of more than 5 is preferably more than 5 and not more than 15, more preferably not less than 7 and not more than 13, and even more preferably not less than 9 and not more than 11. The above configuration provides an advantage that good affinity for oil is achieved, and it is thus possible to more sufficiently remove an adhesive from a material.

In an embodiment of the present invention, the nonionic surfactant is liquid at room temperature. The above configuration provides good affinity for oil and thus makes it possible to mix oil and the surfactant without the need of energy from heating or the like.

The nonionic surfactant is not particularly limited, but preferable examples thereof include: an polyoxyalkylene alkyl ether; a polyoxyalkylene alkenyl ether; a polyoxyalkylene alkylphenyl ether; a polyoxyethylene castor oil; a sorbitan fatty acid ester and an alkylene oxide adduct thereof; a polyoxyalkylene fatty acid ester; and a polyoxyethylene hydrogenated castor oil.

Examples of the polyoxyalkylene alkyl ether include polyoxyethylene lauryl ether, polyoxyethylene cetyl ether, polyoxyethylene stearyl ether, polyoxyethylene polyoxypropylene lauryl ether, polyoxypropylene cetyl ether, polyoxypropylene isocetyl ether, polyoxypropylene stearyl ether, and polyoxyethylene behenyl ether.

Examples of the polyoxyalkylene alkenyl ether include polyoxyethylene oleyl ether and polyoxypropylene oleyl ether.

Examples of the polyoxyalkylene alkylphenyl ether include polyoxyethylene octylphenyl ether.

The polyoxyethylene castor oil is a compound obtained by addition polymerization of ethylene oxide to castor oil. An average addition mole number of the ethylene oxide, although not particularly limited, is preferably 2 to 100, and more preferably 10 to 50. Examples of the polyoxyethylene castor oil include NIKKOL CO-3, NIKKOL CO-10, and NIKKOL CO-35 (Nikko Chemicals); EMALEX C-20, EMALEX C-30, EMALEX C-40, and EMALEX C-50 (Ni-hon Emulsion); and Kolliphor EL (BASF).

Examples of the sorbitan fatty acid ester include sorbitan monooleate, sorbitan monostearate, sorbitan monoisostearate, sorbitan monopalmitate, sorbitan monolaurate, sorbitan trioleate, sorbitan tristearate, sorbitan sesquistearate, sorbitan sesquioleate, sorbitan ses-quiisostearate, and coconut oil fatty acid sorbitan. Examples of the alkylene oxide adduct of a sorbitan fatty acid ester include polyoxyethylene sorbitan monolaurate, polyoxyethylene sorbitan monopalmitate, polyoxyethylene sorbitan monostearate, polyoxyethylene sorbitan monooleate, polyoxyethylene sorbitan monoisostearate, mono-coconut oil fatty acid polyoxyethylene sorbitan, polyoxyethylene sorbitan tristearate, and polyoxyethylene sorbitan trioleate.

Examples of the polyoxyalkylene fatty acid ester include both polyoxyalkylene monofatty acid ester and polyoxyalkylene difatty acid ester. Examples of the polyoxyalkylene monofatty acid ester include polyethylene glycol monofatty acid esters such as polyethylene glycol monooleate, polyethylene glycol monostearate, and polyethylene glycol monolaurate; and propylene glycol monofatty acid esters such as propylene glycol monostearate, propylene glycol monolaurate, and propylene glycol monooleate.

The nonionic surfactant having an HLB of more than 5 is not particularly limited, but suitable examples thereof include a polyoxyalkylene alkyl ether such as DKS NL30 and DKS NL 50 (available from Dai-ichi Kogyo Seiyaku Co., Ltd.) and a sorbitan fatty acid ester such as Tween (registered trademark) 80 and EMASOL O-120V (each of which is polyoxyethylene (20) sorbitan monooleate). The above configuration provides an advantage that good affinity for oil is achieved, and it is thus possible to more sufficiently remove an adhesive from a material.

In an embodiment of the present invention, it is preferable that the anionic surfactant contain a sulfonate. The above configuration provides an advantage that it is possible to sufficiently remove an adhesive from a material.

The anionic surfactant is not particularly limited but is preferably of a sulfonate type or a phosphate type. More preferable examples of the anionic surfactant include an alkyl sulfonate, a polyoxyalkylene alkyl ether sulfonate, and a polyoxyalkylene alkyl ether phosphate. It is more preferable that the anionic surfactant be an alkyl sulfonate. The above configuration provides an advantage that it is possible to sufficiently remove an adhesive from a material.

### (1-3. Other components)

The present adhesive remover may contain other components. Other components are not particularly limited, but examples thereof include water, a petroleum resin, a hydrogenated petroleum resin, a plant-derived resin, a hydrogenated plant-derived resin, an antibacterial agent, a bactericide, a deodorant, a fungicide, an antiseptic agent, a fragrance, a pigment, a dye, a dispersing agent, a pH indicator, a water-releasing agent, and an anti-rust agent.

In a case where the present adhesive remover contains water, the present adhesive remover that has soaked into a material can be more easily cleaned off in the cleaning step (described later) after the removal step. An amount of water added is preferably not more than 10% by weight relative to a total amount of the adhesive remover. In a case of (i) removing an adhesive from a constituent material of an article including a super absorbent polymer as the constituent material and (ii) separating the super absorbent polymer and recycling the super absorbent polymer as a super absorbent polymer for use in hygienic materials such as a diaper, it is preferable that the adhesive remover contain no water even if the adhesive remover contains water.

The adhesive remover may contain an organic solvent, provided that an adhesive removal performance exhibited is on an acceptable level. Examples of the organic solvent include toluene, limonene, chloroform, hexane, ethyl acetate, benzene, alcohol, acetic acid, and acetone.

In a case where the present adhesive remover contains an organic solvent, a content of the organic solvent is preferably 0% by weight to 20% by weight, more preferably 0% by weight to 15% by weight, even more preferably 0% by weight to 10% by weight, and particularly preferably 0% by weight to 5% by weight, relative to a total amount of the adhesive remover. The above configuration provides an advantage that it is possible to remove an adhesive from a material. It is preferable that in the present adhesive remover, a total amount of the oil and the surfactant added be more than an amount(s) of the other component(s). That is, the present adhesive remover is preferably oil based. It is also preferable that the present adhesive remover be of a non-emulsifier type containing no component that has low miscibility with oils.

### (1-4. Adhesive)

An adhesive that can be removed by the present adhesive remover is not particularly limited, but preferable examples thereof include a hot-melt adhesive, a solvent-based adhesive, and a water-based adhesive. The adhesive is preferably an adhesive other than a curable adhesive. Use of the present adhesive remover provides an advantage that it is possible to remove even a base polymer and a tackifier, which are difficult to remove, among the adhesive. Since even a tackifier can be removed, there is an advantage that there is no adhesive residue on the material.

It is more preferable that the present adhesive remover be a hot-melt adhesive remover. The present adhesive remover more suitably exhibits an adhesive removal effect against a hot-melt adhesive.

The hot-melt adhesive is not particularly limited, but examples thereof include a synthetic rubber (elastomer)-based hot-melt adhesive, a polyamide-based hot-melt adhesive, a polyester-based hot-melt adhesive, an acrylic-based hot-melt adhesive, an EVA (ethylene-vinyl acetate copolymer)-based hot-melt adhesive, and an olefin-based hot-melt adhesive. Among these, a synthetic rubber-based hot-melt adhesive in which an elastomer is used and an acrylic-based hot-melt adhesive in which an elastomer is used are more preferable. The above configuration provides an advantage that it is possible to sufficiently remove an adhesive from a material.

Examples of the solvent-based adhesive include a (meth)acrylate-based adhesive, a silicone-based adhesive, a polyvinyl acetate-based adhesive, a polyethylene-vinyl acetate-based adhesive, a polyisoprene rubber-based adhesive, a styrene-methacrylate copolymer-based adhesive, a styrene-butadiene rubber-based adhesive, a styrene-isoprene rubber-based adhesive, a methacrylate-butadiene-styrene copolymer-based adhesive, and a combination thereof. Among these, a (meth)acrylate-based adhesive, a polyisoprene rubber-based adhesive, a styrene-methacrylate copolymer-based adhesive, a styrene-butadiene rubber-based adhesive, a styrene-isoprene rubber-based adhesive, a methacrylate-butadiene-styrene copolymer-based adhesive, and a combination thereof are preferable. The above configuration provides an advantage that it is possible to sufficiently remove an adhesive from a material.

### (1-5. Applications)

The present adhesive remover is suitably used for removal of an adhesive off various articles such as a food packaging material, cardboard, a book, a hygiene product (a disposable diaper, a sanitary product, a pet sheet, a urine absorbing pad, a nursing pad, and the like) and a car floor mat.

### [2. Adhesive removal method]

### (2-1. Adhesive removal step)

An adhesive removal method in accordance with an embodiment of the present invention (may hereinafter be referred to as "the present removal method") includes an adhesive removal step of removing an adhesive, with use of the adhesive remover described in [1. Adhesive remover], from a material to which the adhesive adheres.

The material to which the adhesive adheres is not particularly limited, but the present removal method is applicable to a material such as plastic, a plastic film, pulp, a super absorbent polymer, paper, a nonwoven fabric, an elastic thread, cardboard, felt, or urethane foam.

The method of removing the adhesive, with use of the present adhesive remover, from the material to which the adhesive adheres is not particularly limited, but examples thereof include a method of immersing the material in the present adhesive remover. Note that the material to be immersed in the present adhesive remover only needs to be a material to which an adhesive adheres. The material may be a single material, or a plurality of materials and/or a plurality of types of materials. Each material may be in a state of being bonded with use of the adhesive, and at least part of each material may be unbonded. The material to be immersed in the present adhesive remover may be an article in which a constituent component(s) (a material(s)) is/are bonded with use of an adhesive. Heating may be carried out during the step of removing the adhesive from the material. From the perspective of reducing energy consumption and reducing a size of the equipment, a method of immersing the material in the present adhesive remover is more preferable. From the perspective of efficient removal of the adhesive, a method of immersing the material in the present adhesive remover and stirring is preferable.

### (2-2. Cleaning step)

It is preferable that the present removal method further include a step of cleaning, with use of water, the material from which the adhesive has been removed, in other words, a step of cleaning the material with use of a water-based cleaning liquid. Note that the water-based cleaning liquid means a cleaning liquid consisting of water or containing water. This allows the adhesive remover that has soaked into the material to be cleaned off, and makes it easy to handle the material.

A temperature of the water-based cleaning liquid is not limited, but is preferably 40°C to 80°C from the perspective of reducing the cleaning time. The temperature of the water-based cleaning liquid is preferably 45°C to 80°C, more preferably 50°C to 80°C, even more preferably 55°C to 80°C, and particularly preferably 60°C to 80°C. The above configuration provides an advantage that it is possible to sufficiently remove an adhesive from a material. In particular, setting the temperature of the water-based cleaning liquid to 40°C to 80°C makes it easier to clean off an oil component.

The water-based cleaning liquid is not particularly limited, and may contain a substance other than water, provided that the water-based cleaning liquid is capable of removing the adhesive remover from the material and cleaning the material to an extent that the material is recyclable. Since it is preferable that the water-based cleaning liquid contain water as a main component, a weight of the water relative to a total weight of the water and the substance other than water (a total weight of the water-based cleaning liquid) is preferably at least not less than 60% by weight, and more preferably not less than 90% by weight. Examples of the water include tap water, soft water, hard water, carbonated water, alkali ion water, pure water, and a mixture thereof. Examples of the substance other than water include alcohol and acetone. In a case where the article includes a super absorbent polymer and the super absorbent polymer is not recycled as a super absorbent polymer, the water-based cleaning liquid may further contain a water-releasing agent and the like as the substance other than water. A concentration of the water-releasing agent in the water-based cleaning liquid may be determined in accordance with an amount of the super absorbent polymer included in the article whose constituent materials are cleaned by, for example, immersion into the water-based cleaning liquid. The concentration is preferably 0.1% by weight to 10% by weight. Examples of the water-releasing agent include calcium chloride, magnesium sulfate, citric acid, and acetic acid. In a case where the water-releasing agent is contained in the water-based cleaning liquid, it is possible to prevent the water-absorbing polymer from absorbing water when the material is cleaned with the water-based cleaning liquid to remove the remover after the adhesive is removed from the material. This enables easy handling. In a case where the super absorbent polymer is used for purposes other than water absorption (e.g., used for a fuel or the like), causing the water-releasing agent to be contained in the super absorbent polymer gives no inconvenience but enables easy handling. As such, it is preferable to contain the water-releasing agent in the water-based cleaning liquid.

### (2-3. Separation step)

In a case where a super absorbent polymer is included among materials in an article bonded by an adhesive, the present removal method preferably further includes, after the adhesive removal step of removing the adhesive, with use of the adhesive remover, from the materials to which the adhesive adheres, a separation step of separating the materials, from which the adhesive has been removed, into a super absorbent polymer and a material other than the super absorbent polymer. By providing the separation step after the adhesive removal step without performing the step of cleaning with use of water, it is possible to regenerate the super absorbent polymer which has been separated, without causing the handleability of the super absorbent polymer to be compromised due to absorption of water in the step of cleaning with use of water and without causing a change in properties of the super absorbent polymer due to the water-releasing agent. Thus, it becomes easier to recycle the super absorbent polymer.

A method of separating the materials, from which the adhesive has been removed in the adhesive removal step, into the super absorbent polymer and the material other than the super absorbent polymer is not particularly limited, but examples thereof include filter separation and centrifugal separation. In the case of employing filter separation, a mesh size of a filter may be determined as appropriate in accordance with sizes of the materials included in the article taken out of the adhesive remover. For example, a filter having a mesh size of 0.01 mm to 5 mm is used. The super absorbent polymer passes through the filter together with the adhesive remover, and the material other than the super absorbent polymer does not pass through the filter. It is therefore possible to separate the super absorbent polymer and the material other than the super absorbent polymer from each other.

It is more preferable that the present removal method further include a step of cleaning the separated super absorbent polymer with use of an organic solvent and/or a step of cleaning, with use of a water-based cleaning liquid, the material other than the super absorbent polymer. In general, a super absorbent polymer is a crosslinked polyacrylic acid and a salt thereof and has the property of swelling by absorbing water. Since a super absorbent polymer that has absorbed water is difficult to handle, a water-releasing agent such as calcium chloride is used in a case where cleaning with use of a water-based cleaning liquid is carried out. However, in a case where the water-releasing agent is used, the super absorbent polymer undergoes a change in structure and becomes unable to absorb water (be changed in properties). This makes it difficult to recycle the super absorbent polymer as a super absorbent polymer. In order to prevent this problem, it is preferable that the super absorbent polymer be cleaned with use of an organic solvent. The material (e.g., a nonwoven fabric, pulp, a film) other than the super absorbent polymer is preferably cleaned with use of a water-based cleaning liquid in a manner similar to the manner described above, in order to reduce environmental impact. The water-based cleaning liquid for cleaning the material other than the super absorbent polymer may be the same as the water-based cleaning liquid described in the step of cleaning a material from which an adhesive has been removed. Note that in a case where the super absorbent polymer is not recycled or in a case where no problem arises from causing the super absorbent polymer to contain water, the above-described step of cleaning with use of the water-based cleaning liquid may be carried out without separating the materials from which the adhesive has been removed into the super absorbent polymer and the material other than the super absorbent polymer. In an embodiment, the present removal method includes: the adhesive removal step of removing an adhesive from materials which are included in an article bonded by the adhesive and to which the adhesive adheres; the separation step of separating the materials, from which the adhesive has been removed, into the super absorbent polymer and a material other than the super absorbent polymer; and the cleaning step of cleaning, with use of an organic solvent, the super absorbent polymer separated in the separation step. In a case where the adhesive is removed by immersing the article in an organic solvent, an amount of the organic solvent used is greater than that in the present removal method. Further, in that case, more time and effort are required because it is not possible to easily remove the organic solvent when recycling a nonwoven fabric, pulp, a film, or the like which is a material other than the super absorbent polymer.

The organic solvent for cleaning the super absorbent polymer separated in the separation step is not limited to any particular type, purity, and the like, provided that the organic solvent is capable of cleaning off the adhesive remover that has soaked into the material and of cleaning the super absorbent polymer to an extent that the super absorbent polymer can be recycled. Examples of the organic solvent include a polar solvent, a nonpolar solvent, and a mixture thereof. Examples of the polar solvent include: an alcohol such as methanol, ethanol, and glycerin; a ketone such as acetone and methyl ethyl ketone; an ether such as diethyl ether and tetrahydrofuran; an ester such as ethyl acetate and butyl acetate; and dimethyl sulfoxide. Examples of the nonpolar solvent include an aliphatic compound such as hexane, cyclohexane, and limonene; and an aromatic hydrocarbon such as toluene and xylene. The organic solvent preferably has a molecular weight of not more than 200 from the perspective of solubility of the adhesive remover. It is more preferable that the polar solvent be methanol or ethanol. It is more preferable that the nonpolar solvent be pentane, hexane, or cyclohexane.

A method of cleaning the super absorbent polymer with use of the organic solvent may involve using one type of organic solvent or involve using a plurality of types of organic solvents, and there is no limitation on the number of times of cleaning. For example, it is possible to use a single organic solvent or a mixed solvent of a plurality of organic solvents. It is also possible to carry out cleaning with a nonpolar solvent after carrying out cleaning with use of a polar solvent. Alternatively, it is possible to carry out cleaning with use of a polar solvent after carrying out cleaning with use of a nonpolar solvent. In a case where a mixed solvent of a polar solvent and a nonpolar solvent is used, a ratio of the polar solvent and the nonpolar solvent may be 1:9 to 9:1 in terms of volume. The method of cleaning the super absorbent polymer with use of the organic solvent preferably involves cleaning with use of a mixture of a polar solvent and a nonpolar solvent or with use of a polar solvent and a nonpolar solvent in stages. The step of cleaning the superabsorbent polymer with use of the organic solvent is ordinarily carried out at room temperature, and may be carried out while heating as appropriate.

There is no particular limitation on a method of cleaning (i) the material from which the adhesive has been removed in the adhesive removal step and (ii) the super absorbent polymer or the material other than the super absorbent polymer separated in the separation step. Examples of the method include a method in which an object to be cleaned is stirred in a water-based cleaning liquid or an organic solvent with use of a washing machine, a stirring blade, a stirrer, or the like. The number of cleaning is not particularly limited, and may be once or a plurality of times.

### [Recap]

An embodiment of the present invention encompasses the following configurations.
<1> An adhesive remover, containing oil and a surfactant,
   the oil containing at least one selected from the group consisting of a vegetable oil, an ester oil, an aliphatic carboxylic acid, and a mineral oil,
   the vegetable oil having an iodine value of 70 to 160,
   the ester oil having not more than three ester groups per molecule,
   the surfactant containing an anionic surfactant and/or a nonionic surfactant that has an HLB of more than 5 and is liquid at room temperature.
<2> The adhesive remover described in <1>, wherein a proportion of the oil contained is more than 10% by weight and less than 70% by weight relative to 100% by weight of a total of the oil and the surfactant.
<3> The adhesive remover described in either <1> or <2>, wherein the HLB of the nonionic surfactant is not more than 15.
<4> The adhesive remover described in any one of <1> to <3>, wherein the ester oil and the mineral oil each have an SP value of not less than 8.0 and not more than 9.5.
<5> The adhesive remover described in any one of <1> to <4>, wherein the adhesive remover is a hot-melt adhesive remover.
<6> An adhesive removal method, including an adhesive removal step of removing an adhesive, with use of an adhesive remover described in any one of <1> to <5>, from one or more materials to which the adhesive adheres.
<7> The adhesive removal method described in <6>, further including:
   a cleaning step of cleaning, with use of water, the one or more materials from which the adhesive has been removed in the adhesive removal.
<8> The adhesive removal method described in <6>, wherein the one or more materials include a super absorbent polymer, the adhesive removal method further including:
   a separation step of separating the one or more materials, from which the adhesive has been removed, into the super absorbent polymer and a material that is other than the super absorbent polymer.
<9> The adhesive removal method described in <8>, further including:
   a cleaning step of cleaning, with use of an organic solvent, the super absorbent polymer separated in the separation step.
<10> The adhesive removal method described in <8> or <9>, further including:
   a cleaning step of cleaning, with use of water, the material that is other than the super absorbent polymer and has been separated in the separation step.

### Examples

The following description will discuss Examples. Note that the present invention is not limited to Examples below.

### [Materials]

In Examples and Comparative Examples below, the following materials were used.

### <Oil>

### (Vegetable oil)

· Soybean oil (iodine value: 131): available from KANEDA Co., Ltd.
· Rice oil (iodine value: 104): available from Boso Oil & Fat Co., Ltd.
· Rapeseed oil (iodine value: 110): available from Yonezawa Oil Manufacturing Co., Ltd.
· Olive oil (iodine value: 85): available from J-OIL MILLS, INC.
· Linseed oil (iodine value: 187): available from Nippon Flour Mills Co., Ltd.

### (Ester oil)

· DOS (bis(2-ethylhexyl) sebacate, the number of ester groups per molecule: 2, SP value: 9.1): available from New Japan Chemical Co., Ltd.
· ATBC (tributyl acetylcitrate, the number of ester groups per molecule: 4, SP value: 9.8): available from Taoka Chemical Co., Ltd.

### (Aliphatic carboxylic acid)

· Alkenyl succinic anhydride (maleic acid-modified α-olefin) (SP value: 10.1): available from SEIKO PMC CORPORATION, AS-1532

### (Mineral oil)

· MORESCO-WHITE "P-200" (liquid paraffin, SP value: 8.1): available from MORESCO Corporation
· COSMO NEUTRAL 150 (aromatic mineral oil, SP value: 8.7): available from COSMO OIL LUBRICANTS CO., LTD

### <Other>

· d-limonene

### <Surfactant>

### (Nonionic surfactant)

· DKS NL 15 (HLB = 5, liquid): available from Dai-ichi Kogyo Seiyaku Co., Ltd.
· DKS NL 30 (HLB = 8, liquid): available from Dai-ichi Kogyo Seiyaku Co., Ltd.
· DKS NL 50 (HLB = 10, liquid): available from Dai-ichi Kogyo Seiyaku Co., Ltd. · DKS NL Dash 410 (HLB = 12, liquid): available from Dai-ichi Kogyo Seiyaku Co., Ltd.
· DKS NL 110 (HLB = 14, semisolid): available from Dai-ichi Kogyo Seiyaku Co., Ltd.
· EMASOL O-120V (HLB = 15, liquid): available from Kao Corporation
· DKS NL 180 (HLB = 16, semisolid): available from Dai-ichi Kogyo Seiyaku Co., Ltd.
· DKS NL 450F (HLB = 18, solid): available from Dai-ichi Kogyo Seiyaku Co., Ltd.

### (Anionic surfactant)

· SULFOL 430A (surfactant (sodium sulfonate) 65%, spindle oil 30%, water 5%, liquid): available from MORESCO Corporation

### <Solvent>

· Water

### <Water-releasing agent>

· Citric acid

### [Method of preparing samples for evaluation]

A hot-melt adhesive (rubber-based, available from MORESCO Corporation) was applied onto a first base material (a spunbond nonwoven fabric) by ZIP coating (available from SUN-TOOL CORPORATION) at a coating temperature of 150°C. An amount of the coating was 5 g/m², and a width of the coating was 15 mm. Subsequently, a second base material (a polyethylene film) was placed on and press-bonded at 23°C to a surface of the first base material on which surface the hot-melt adhesive had been applied. Thus, a laminated body was prepared. It took 0.5 seconds from a time point when the hot-melt adhesive was applied onto the first base material until the second base material was press-bonded to prepare the laminated body. From the laminated body sample obtained, a 50 mm x 50 mm piece was cut out such that a 15-mm-width portion where the adhesive had been applied was located at a center so as to be parallel to one side. The piece was used as a sample for evaluation.

### [Preparation of adhesive remover (Examples 1 to 19 and Comparative Examples 1 to 8)]

Oil and a surfactant were measured in a glass container in respective predetermined amounts so as to achieve a ratio (parts by weight) indicated in Tables 1 to 3. The oil and the surfactant were stirred at room temperature for one minute until there was no phase separation. Thus obtained was an adhesive remover. In Examples 5 and 11, each of which used SULFOL 430A as a surfactant, SULFOL 430A used contained a surfactant (sodium sulfonate), oil, and water. As such, in Examples 5 and 11, the surfactant (sodium sulfonate) was added such that a content of the surfactant was 50% by weight relative to 100% by weight of the adhesive remover.

### [Removal of adhesive with use of adhesive remover (Examples 1 to 19 and Comparative Examples 1 to 8)]

The above sample for evaluation was introduced into 10 g of the adhesive remover and immersed in the adhesive remover for 1 hour. The sample for evaluation exhibited separation in the adhesive remover. The immersed sample for evaluation was taken out of the remover and put in another glass bottle. 100 g of warm water of 60°C was introduced into the glass bottle and stirred well for 10 seconds. The above operation was repeated two more times to carry out cleaning. The cleaned sample for evaluation was taken out and dried, and a state of the sample for evaluation was checked. Whether or not the adhesive and the adhesive remover were sufficiently removed from the materials was evaluated in accordance with the following evaluation criteria.

### (State of mixing of adhesive remover)

Excellent: Liquid is transparent in a mixed state
Good: Liquid is homogeneous in a mixed state
Poor: Mixture exhibits separation after being left to stand still for 3 hours
Unacceptable: Mixture is exhibiting separation or is solid (State of peeling of sample for evaluation after immersion in adhesive remover)
Good: Sample for evaluation is peeled off
Unacceptable: Sample for evaluation is not peeled off (State of surface of sample for evaluation after cleaning)
Excellent: Not slimy
Good: Slightly slimy
Unacceptable: Slimy, or there is a hot-melt adhesive remaining
Being "slimy" herein means being slimy due to oil contained in the adhesive remover.

### [Viscosity]

Viscosity was measured in accordance with JIS K 6862. A viscosity of the oil and the adhesive remover at 23°C was measured with use of a type B viscometer RVDV2T (a rotor of a spindle No. 21) available from Brookfield AMETEK, Inc.

### [Table 1]

**(Table 1)**

| | | | | | Example | | | | |
|---|---|---|---|---|---|---|---|---|---|
| | | | | | 1 | 2 | 3 | 4 | 5* |
| | Vegetable oil | Soybean oil | Iodine value: 131 | | 5 | 5 | 5 | 5 | 2.3 |
| | | Rice oil | Iodine value: 104 | | | | | | |
| | | Rapeseed oil | Iodine value: 110 | | | | | | |
| | | Olive oil | Iodine value: 85 | | | | | | |
| | | Linseed oil | Iodine value: 187 | | | | | | |
| Oil | Ester oil | DOS | SP value: 9.1 (two ester groups) | | | | | | |
| | | ATBC | SP value: 9.8 (four ester groups) | | | | | | |
| | Aliphatic carboxylic acid | Alkenyl succinic acid | Maleic acid-modified α-olefin | | | | | | |
| | Mineral oil | MORESCO-WHITE P-200 | Liquid paraffin (SP value: 8.1) | | | | | | |
| | | COSMO NEUTRAL 150 | Aromatic mineral oil (SP value: 8.7) | | | | | | |
| Other | | *d*-limonene | - | | | | | | |
| | Nonionic | DKS NL 15 | HLB = 5 | Liquid | | | | | |
| | | DKS NL 30 | HLB = 8 | Liquid | 5 | | | | |
| | | DKS NL 50 | HLB = 10 | Liquid | | 5 | | | |
| Surfactant | | DKS NL Dash 410 | HLB = 12 | Liquid | | | 5 | | |
| | | DKS NL 110 | HLB = 14 | Semisolid | | | | | |
| | | EMASOL O-120V | HLB = 15 | Liquid | | | | 5 | |
| | | DKS NL 180 | HLB = 16 | Semisolid | | | | | |
| | | DKS NL 450F | HLB = 18 | Solid | | | | | |
| | Anionic | SULFOL 430A | Surfactant 65%, spindle oil 30%, water 5% | | | | | | 7.7 |
| Solvent | Water | | - | | | | | | |
| Water-releasing agent | Citric acid | | - | | | | | | |
| Test result | | | Viscosity at 23°C/mPa·s | | 38 | 46 | 96 | 420 | 425 |
| | | | State of mixing of adhesive remover | | Excellent | Excellent | Good | Good | Good |
| | | | State of peeling of sample for evaluation after immersion | | Good | Good | Good | Good | Good |
| | | | State of surface after cleaning | | Excellent | Excellent | Excellent | Excellent | Good |

| | | | | | | | | | |
|---|---|---|---|---|---|---|---|---|---|
| * SULFOL 430A contains a surfactant, oil, and water and therefore was added such that the content of the surfactant was 50% by weight relative to 100% by weight of the adhesive remover. | | | | | | | | | |

**(Table 1)**

| | | | | | Comparative Example | | | |
|---|---|---|---|---|---|---|---|---|
| | | | | | 1 | 2 | 3 | 4 |
| | Vegetable oil | Soybean oil | Iodine value: 131 | | 5 | 5 | 5 | 5 |
| | | Rice oil | Iodine value: 104 | | | | | |
| | | Rapeseed oil | Iodine value: 110 | | | | | |
| | | Olive oil | Iodine value: 85 | | | | | |
| | | Linseed oil | Iodine value: 187 | | | | | |
| Oil | Ester oil | DOS | SP value: 9.1 (two ester groups) | | | | | |
| | | ATBC | SP value: 9.8 (four ester groups) | | | | | |
| | Aliphatic carboxylic acid | Alkenyl succinic acid | Maleic acid-modified α-olefin | | | | | |
| | Mineral oil | MORESCO-WHITE P-200 | Liquid paraffin (SP value: 8.1) | | | | | |
| | | COSMO NEUTRAL 150 | Aromatic mineral oil (SP value: 8.7) | | | | | |
| Other | | *d*-limonene | - | | | | | |
| | Nonionic | DKS NL 15 | HLB = 5 | Liquid | 5 | | | |
| | | DKS NL 30 | HLB = 8 | Liquid | | | | |
| | | DKS NL 50 | HLB = 10 | Liquid | | | | |
| | | DKS NL Dash 410 | HLB = 12 | Liquid | | | | |
| Surfactant | | DKS NL 110 | HLB = 14 | Semisolid | | 5 | | |
| | | EMASOL O-120V | HLB = 15 | Liquid | | | | |
| | | DKS NL 180 | HLB = 16 | Semisolid | | | 5 | |
| | | DKS NL 450F | HLB = 18 | Solid | | | | 5 |
| | Anionic | SULFOL 430A | Surfactant 65%, spindle oil 30%, water 5% | | | | | |
| Solvent | Water | | - | | | | | |
| Water-releasing agent | Citric acid | | - | | | | | |
| Test result | | | Viscosity at 23°C/mPa·s | | 30 | - | - | - |
| | | | State of mixing of adhesive remover | | Excellent | Poor | Unacceptable | Unacceptable |
| | | | State of peeling of sample for evaluation after immersion | | Good | Good | - | - |
| | | | State of surface after cleaning | | Unacceptable | Unacceptable | | |

### [Table 2]

**(Table 2)**

| | | | | | Example | | | | | |
|---|---|---|---|---|---|---|---|---|---|---|
| | | | | | 6 | 7 | 8 | 9 | 10 | 11* |
| | Vegetable oil | Soybean oil | Iodine value: 131 | | | | | | | |
| | | Rice oil | Iodine value: 104 | | 5 | 5 | | | | |
| | | Rapeseed oil | Iodine value: 110 | | | | 5 | | | |
| | | Olive oil | Iodine value: 85 | | | | | 5 | | |
| | | Linseed oil | Iodine value: 187 | | | | | | | |
| Oil | Ester oil | DOS | SP value: 9.1 (two ester groups) | | | | | | 5 | 2.3 |
| | | ATBC | SP value: 9.8 (four ester groups) | | | | | | | |
| | Aliphatic carboxylic acid | Alkenyl succinic acid | Maleic acid-modified α-olefin | | | | | | | |
| | Mineral oil | MORESCO-WHITE P-200 | Liquid paraffin (SP value: 8.1) | | | | | | | |
| | | COSMO NEUTRAL 150 | Aromatic mineral oil (SP value: 8.7) | | | | | | | |
| Other | | d-limonene | - | | | | | | | |
| | Nonionic | DKS NL 15 | HLB = 5 | Liquid | | | | | | |
| | | DKS NL 30 | HLB = 8 | Liquid | 5 | | 5 | 5 | | |
| | | DKS NL 50 | HLB = 10 | Liquid | | | | | | |
| Surfactant | | DKS NL Dash 410 | HLB = 12 | Liquid | | | | | | |
| | | DKS NL 110 | HLB = 14 | Semisolid | | | | | | |
| | | EMASOL O-120V | HLB = 15 | Liquid | | 5 | | | 5 | |
| | | DKS NL 180 | HLB = 16 | Semisolid | | | | | | |
| | | DKS NL 450F | HLB = 18 | Solid | | | | | | |
| | Anionic | SULFOL 430A | Surfactant 65%, spindle oil 30%, water 5% | | | | | | | 7.7 |
| Solvent | Water | | - | | | | | | | |
| Water-releasing agent | Citric acid | | - | | | | | | | |
| Test result | | | Viscosity at 23°C/mPa·s | | 40 | 238 | 38 | 39 | 164 | 225 |
| | | | State of mixing of adhesive remover | | Excellent | Excellent | Excellent | Excellent | Excellent | Good |
| | | | State of peeling of sample for evaluation after immersion | | Good | Good | Good | Good | Good | Good |
| | | | State of surface after cleaning | | Excellent | Good | Good | Good | Excellent | Excellent |

| | | | | | | | | | | |
|---|---|---|---|---|---|---|---|---|---|---|
| * SULFOL 430A contains a surfactant, oil, and water and therefore was added such that the content of the surfactant was 50% by weight relative to 100% by weight of the adhesive remover. | | | | | | | | | | |

**(Table 2)**

| | | | | | Example | | | | Comp. Example | |
|---|---|---|---|---|---|---|---|---|---|---|
| | | | | | 12 | 13 | 14 | 15 | 5 | 6 |
| | Vegetable oil | Soybean oil | Iodine value: 131 | | | | | | | |
| | | Rice oil | Iodine value: 104 | | | | | | | |
| | | Rapeseed oil | Iodine value: 110 | | | | | | | |
| | | Olive oil | Iodine value: 85 | | | | | | | |
| | | Linseed oil | Iodine value: 187 | | | | | | | 5 |
| Oil | Ester oil | DOS | SP value: 9.1 (two ester groups) | | 5 | | | | | |
| | | ATBC | SP value: 9.8 (four ester groups) | | | | | | 5 | |
| | Aliphatic carboxylic acid | Alkenyl succinic acid | Maleic acid-modified α-olefin | | | 5 | | | | |
| | Mineral oil | MORESCO-WHITE P-200 | Liquid paraffin (SP value: 8.1) | | | | 5 | | | |
| | | COSMO NEUTRAL 150 | Aromatic mineral oil (SP value: 8.7) | | | | | 5 | | |
| Other | | d-limonene | - | | | | | | | |
| | Nonionic | DKS NL 15 | HLB = 5 | Liquid | | | | | | |
| | | DKS NL 30 | HLB = 8 | Liquid | 5 | | 5 | 5 | | |
| | | DKS NL 50 | HLB = 10 | Liquid | | | | | | |
| Surfactant | | DKS NL Dash 410 | HLB = 12 | Liquid | | | | | | |
| | | DKS NL 110 | HLB = 14 | Semisolid | | | | | | |
| | | EMASOL O-120V | HLB = 15 | Liquid | | 5 | | | 5 | 5 |
| | | DKS NL 180 | HLB = 16 | Semisolid | | | | | | |
| | | DKS NL 450F | HLB = 18 | Solid | | | | | | |
| | Anionic | SULFOL 430A | Surfactant 65%, spindle oil 30%, water 5% | | | | | | | |
| Solvent | Water | | - | | | | | | | |
| Water-releasing agent | Citric acid | | - | | | | | | | |
| Test result | | | Viscosity at 23°C/mPa·s | | 37 | 1108 | 43 | 23 | 123 | Difficult to handle |
| | | | State of mixing of adhesive remover | | Excellent | Good | Excellent | Excellent | Excellent | |
| | | | State of peeling of sample for evaluation after immersion | | Good | Good | Good | Good | Unacceptable | |
| | | | State of surface after cleaning | | Good | Excellent | Good | Good | Unacceptable | |

### [Table 3]

**(Table 3)**

| | | | | | Example | | | | Comp. Example | |
|---|---|---|---|---|---|---|---|---|---|---|
| | | | | | 16 | 17 | 18 | 19 | 7 | 8 |
| | Vegetable oil | Soybean oil | Iodine value: 131 | | 6 | 4 | 3 | 2 | 10 | |
| | | Rice oil | Iodine value: 104 | | | | | | | |
| | | Rapeseed oil | Iodine value: 110 | | | | | | | |
| | | Olive oil | Iodine value: 85 | | | | | | | |
| | | Linseed oil | Iodine value: 187 | | | | | | | |
| Oil | Ester oil | DOS | SP value: 9.1 (two ester groups) | | | | | | | |
| | | ATBC | SP value: 9.8 (four ester groups) | | | | | | | |
| | Aliphatic carboxylic acid | Alkenyl succinic acid | Maleic acid-modified α-olefin | | | | | | | |
| | Mineral oil | MORESCO-WHITE P-200 | Liquid paraffin (SP value: 8.1) | | | | | | | |
| | | COSMO NEUTRAL 150 | Aromatic mineral oil (SP value: 8.7) | | | | | | | |
| Other | | d-limonene | - | | | | | | | 0.05 |
| | Nonionic | DKS NL 15 | HLB = 5 | Liquid | | | | | | |
| | | DKS NL 30 | HLB = 8 | Liquid | | | | | | |
| | | DKS NL 50 | HLB = 10 | Liquid | | | | | | |
| Surfactant | | DKS NL Dash 410 | HLB = 12 | Liquid | | | | | | |
| | | DKS NL 110 | HLB = 14 | Semisolid | | | | | | |
| | | EMASOL O-120V | HLB = 15 | Liquid | 4 | 6 | 7 | 8 | | |
| | | DKS NL 180 | HLB = 16 | Semisolid | | | | | | |
| | | DKS NL 450F | HLB = 18 | Solid | | | | | | |
| | Anionic | SULFOL 430A | Surfactant 65%, spindle oil 30%, water 5% | | | | | | | |
| Solvent | Water | | - | | | | | | | 97.95 |
| Water-releasing agent | Citric acid | | - | | | | | | | 2 |
| Test result | | | Viscosity at 23°C/mPa·s | | 141 | 1155 | 1625 | 466 | 54 | 1 |
| | | | State of mixing of adhesive remover | | Good | Good | Good | Good | Excellent | Unacceptable |
| | | | State of peeling of sample for evaluation after immersion | | Good | Good | Good | Good | Good | Unacceptable |
| | | | State of surface after cleaning | | Good | Excellent | Excellent | Excellent | Unacceptable | Unacceptable |

### (Consideration)

Table 1 shows results of evaluation of adhesive removers obtained by mixing respective various surfactants to soybean oil (iodine value: 131). In Examples 1 to 5, in each of which an anionic surfactant or a nonionic surfactant that had an HLB of more than 5 and was liquid at room temperature was used, it was possible to sufficiently remove the adhesive from the sample and to remove the adhesive remover from the base material by cleaning. In contrast, in Comparative Example 1, in which a nonionic surfactant having an HLB of not more than 5 was used, the oil of the adhesive remover and the adhesive were partially remaining on the base material after the cleaning. Also in Comparative Example 2, in which a semisolid nonionic surfactant was used, the adhesive was remaining on the base material after the cleaning. Comparative Examples 3 and 4, in each of which a semisolid or solid nonionic surfactant was mixed, were found unsuitable because the surfactant was not dissolved in the oil but was separated.

Table 2 shows results of evaluation of adhesive removers obtained by mixing respective various surfactants to various oils other than soybean oil. In Examples 6 to 9, in each of which a vegetable oil having an iodine value of 70 to 160 was used, it was possible to sufficiently remove the adhesive from the sample and to remove the adhesive remover from the base material after the cleaning. Similar results were obtained in Examples 10 to 15, in each of which an ester oil having not more than two ester groups per molecule, an aliphatic carboxylic acid, or a mineral oil was used. However, in Comparative Example 5, in which ATBC having not less than three ester groups per molecule was used, the adhesive could not be sufficiently removed but was remaining on the base material after the cleaning. Comparative Example 6, in which linseed oil having an iodine value of more than 160 was used, was difficult to handle due to being pyrophoric, and was therefore not suitable for the present invention.

As indicated by results of Examples 16 to 19 and Comparative Example 7 in Table 3, containing a surfactant in an adhesive remover allowed an adhesive to be sufficiently removed from the sample and allowed the adhesive remover to be cleaned off from the base material after the cleaning. This allows a recovered article to be easily reused as a resource. Comparative Example 8 is a result obtained by trying the removal method in accordance with an embodiment of the present invention with use of an aqueous terpene (d-limonene) solution of the conventional technology. The conventional technology utilizes a centrifugal force of a washing machine in order to deconstruct an article to which an adhesive adheres. In the case where the removal method in accordance with an embodiment of the present invention was tried with use of the aqueous terpene solution in accordance with the conventional technology, merely immersing the sample in the aqueous terpene solution did not cause the sample to peel off, because limonene separates from water. Further, the adhesive was remaining on the base material even after the cleaning of the sample. This indicates that the aqueous terpene solution in accordance with the conventional technology is not capable of removing an adhesive from a base material.

### [Removal of adhesive with use of adhesive remover (disposable diaper)]

### (Removal of adhesive)

A commercially available disposable diaper for infants, which was rolled up by being fastened with a hook and loop tape, was introduced into an adhesive remover which had been prepared by mixing 50 parts by weight of soybean oil and 50 parts by weight of EMASOL O-120V, and was immersed in the adhesive remover for one hour. In the adhesive remover, the fastening of the disposable diaper became undone, and a surface layer part was separated.

### (Cleaning with use of water)

The disposable diaper taken out of the adhesive remover was lightly wringed out. Then, the disposable diaper was put in a cleaning net and introduced into a washing machine. Into the washing tube, 20 g of calcium chloride (water-releasing agent) was put, 10 L of warm water of 60°C was introduced, and a resultant mixture was stirred in the washing machine for 15 minutes. After the stirring, water was introduced to carry out rinsing twice, and the washing machine was drained for 5 minutes. The disposable diaper was taken out of the cleaning net and evaluated. The disposable diaper had been separated into base materials (materials), and the materials (materials) had no adhesive or remover remaining thereon and exhibited no sliminess. This result is better than the result obtained by the method indicated in Patent Literature 1 (Comparative Example 8). Note that removal of the adhesive was possible without carrying out stirring during the immersion of the disposable diaper in the adhesive remover, but stirring during the immersion allowed the adhesive to be removed within a short period of time. Although it is difficult with the above treatment method to recycle the super absorbent polymer as a water-absorbing substance because the water-releasing agent causes a change in properties of the super absorbent polymer, the treatment method is suitable for recycling the base materials, since the adhesive and the like do not remain on the base materials.

### (Separation into super absorbent polymer and other materials, and cleaning)

In accordance with the method described in the section "(Removal of adhesive)", a disposable diaper for infants was immersed in the adhesive remover for one hour, and then the adhesive remover, in which the disposable diaper was being immersed, was passed through a filter. This caused a super absorbent polymer (a filtrate side) and materials other than the super absorbent polymer (a filtered residue side) to be separated from each other. The separated materials other than the super absorbent polymer were cleaned with use of water in the above-described manner. The materials had no adhesive or adhesive remover remaining thereon and exhibited no sliminess.

The separated super absorbent polymer was immersed and stirred in room-temperature methanol for one minute. The super absorbent polymer was taken out of the methanol, and was immersed and stirred in room-temperature n-hexane for one minute. The super absorbent polymer taken out of the n-hexane was neither slimy nor sticky, and there was no adhesive or adhesive remover remaining on the super absorbent polymer.

Pouring water on the super absorbent polymer, which had been cleaned with the organic solvent, caused the super absorbent polymer to swell by absorbing the water. It was thus found that a super absorbent polymer from which an adhesive is removed by the present cleaning method is recyclable as a water-absorbing substance without being changed in properties.

Further, a disposable diaper was immersed in each of the adhesive removers used in Examples 1 to 19, so that an adhesive was removed. Then, the disposable diaper was separated into a super absorbent polymer and materials other than the super absorbent polymer. It was confirmed that cleaning the separated super absorbent polymer with an organic solvent also provided a similarly good effect.

Likewise, the separated materials other than the super absorbent polymer were stirred, with use of a washing machine, in warm water of 60°C (10 L) in the washing machine for 15 minutes. After the stirring, water was introduced to carry out rinsing twice, and the washing machine was drained for 5 minutes. The materials had no adhesive or adhesive remover remaining thereon and were neither slimy nor sticky.

### Industrial Applicability

The present invention is applicable to removal of an adhesive.

## Claims

1. An adhesive remover, comprising oil and a surfactant,
- the oil containing at least one selected from the group consisting of a vegetable oil, an ester oil, an aliphatic carboxylic acid, and a mineral oil,
- the vegetable oil having an iodine value of 70 to 160,
- the ester oil having not more than three ester groups per molecule,
- the surfactant containing an anionic surfactant and/or a nonionic surfactant that has an HLB of more than 5 and is liquid at room temperature.

2. The adhesive remover as set forth in claim 1, wherein a proportion of the oil contained is more than 10% by weight and less than 70% by weight relative to 100% by weight of a total of the oil and the surfactant.

3. The adhesive remover as set forth in claim 1, wherein the HLB of the nonionic surfactant is not more than 15.

4. The adhesive remover as set forth in claim 1, wherein the ester oil and the mineral oil each have an SP value of not less than 8.0 and not more than 9.5.

5. The adhesive remover as set forth in claim 1, wherein the adhesive remover is a hot-melt adhesive remover.

6. An adhesive removal method, comprising an adhesive removal step of removing an adhesive, with use of an adhesive remover recited in any one of claims 1 to 5, from one or more materials to which the adhesive adheres.

7. The adhesive removal method as set forth in claim 6, further comprising a cleaning step of cleaning, with use of water, the one or more materials from which the adhesive has been removed in the adhesive removal step.

8. The adhesive removal method as set forth in claim 6, wherein the one or more materials include a super absorbent polymer, the adhesive removal method further comprising a separation step of separating the one or more materials, from which the adhesive has been removed, into the super absorbent polymer and a material that is other than the super absorbent polymer.

9. The adhesive removal method as set forth in claim 8, further comprising a cleaning step of cleaning, with use of an organic solvent, the super absorbent polymer separated in the separation step.

10. The adhesive removal method as set forth in claim 8, further comprising a cleaning step of cleaning, with use of water, the material that is other than the super absorbent polymer and has been separated in the separation step.
